# FASCICULE DE BREVET EUROPEEN

(11) **EP 0 816 664 B1**
(45) Date de publication et mention de la délivrance du brevet: **12.03.2003**
(21) Numéro de dépôt: 97401317.9
(22) Date de dépôt: 11.06.1997
(51) Int. Cl.: F02K 7/10

(54) **Dispositif d'injection de combustible pour statoréacteur fonctionnand à un nombre de mach élevé**
Brennstoffeinspritzeinrichtung für ein Staustrahltriebwerk mit hoher Machzahl
Fuel injector for a ramjet working at high Mach number

(30) Priorité: 24.06.1996 FR 9607802
(43) Date de publication de la demande: 07.01.1998
(73) Titulaire: AEROSPATIALE MATRA, 75016 Paris (FR)
(72) Inventeur: Bouchez, Marc, 18000 Bourges (FR); Saunier, Emmanuel, 18000 Bourges (FR)
(74) Mandataire: Bonnetat, Christian

(56) Documents cités:
- FR-A- 2 636 677
- US-A- 3 699 773
- US-A- 3 727 409

## Description

La présente invention concerne un dispositif d'injection de combustible pour un statoréacteur fonctionnant à un nombre de Mach élevé, par exemple de l'ordre de 12 à 15.

On sait que, pour la propulsion d'aéronefs hypersoniques (missiles, engins, avions, etc ...), les statoréacteurs sont particulièrement avantageux, car ils permettent de fonctionner dans une large plage de nombre de Mach, par exemple de 2 à 15, et ils présentent une faible consommation spécifique de combustible. En fonction de l'application particulière à un aéronef, et éventuellement de la phase de vol de ce dernier, le combustible utilisé peut être un hydrocarbure liquide, tel que le kérosène par exemple, ou un gaz, tel que l'hydrogène ou le méthane par exemple.

On sait de plus qu'un statoréacteur comporte, d'une part, au moins une entrée de comburant, constituée le plus généralement par une manche à air ou une prise d'air, dirigeant une veine de comburant (c'est-à-dire de l'air) vers une chambre de combustion et, d'autre part, au moins un dispositif d'injection permettant d'injecter le combustible dans ladite veine de comburant, de façon à obtenir un flux de mélange comburant-combustible qui est allumé dans ladite chambre de combustion.

Dans les statoréacteurs prévus pour des fonctionnements à un nombre de Mach peu élevé (par exemple jusqu'à Mach 2), un tel dispositif d'injection de combustible peut être constitué par un ensemble d'injecteurs élémentaires, disposés sur la paroi interne du statoréacteur, à la périphérie de la veine de comburant.

Cependant, pour des fonctionnements à des nombres de Mach élevés, quand la combustion dans le statoréacteur se fait dans une veine supersonique ou hypersonique, l'injection de combustible ne peut plus être faite uniquement à la paroi interne du statoréacteur. En effet, dans ce cas, la pénétration des jets de combustible dans la veine de comburant est trop faible pour que l'on puisse obtenir un bon mélange du comburant et du combustible à l'intérieur de ladite veine, de sorte que la combustion est mauvaise, ou même impossible. Bien entendu, un tel inconvénient est d'autant plus important que les dimensions transversales de la veine de comburant sont plus grandes.

Aussi, pour y remédier, on a déjà prévu, comme cela est décrit par exemple par le document US-A-3 727 409, des dispositifs d'injection en forme de rampes, pourvus d'une pluralité d'injecteurs élémentaires répartis sur leur longueur, que l'on dispose dans ladite veine de comburant, transversalement à celle-ci, en solidarisant les extrémités desdites rampes à des parois opposées dudit statoréacteur. Un tel dispositif d'injection est généralement désigné par le terme "mât d'injection" et il est utilisé soit isolément, soit en combinaison avec une injection de combustible en paroi.

Grâce aux mâts d'injection, on peut ainsi obtenir un mélange comburant-combustible satisfaisant à travers toute la section de la veine de comburant. Plus généralement, les mâts d'injection implantés dans un statoréacteur hypersonique permettent :
- d'assurer une alimentation de combustible dans toute la veine de comburant, malgré la faible pénétration des jets de combustible dans une veine de comburant à vitesse hypersonique ;
- d'augmenter la proportion de combustible dans le mélange comburant-combustible ;
- d'aider à l'allumage du mélange comburant-combustible et à stabiliser la flamme ;
- de participer à la compression de la veine de comburant, en ralentissant l'écoulement de comburant capté par le statoréacteur.

De tels mâts d'injection, qui sont soumis à l'action de la veine de comburant, se comportent donc chacun, du point de vue aérodynamique, comme une aile encastrée à ses extrémités dans deux parois opposées du statoréacteur. De plus, du côté de leur étrave qui reçoit la veine de comburant, lesdits mâts d'injection doivent présenter un bord d'attaque de faible rayon pour limiter les pertes de pression, qui limiteraient les performances propulsives du statoréacteur et pourraient même conduire à un blocage de la veine de comburant, qui ne peut rester hypersonique dans la chambre de combustion que si la vitesse du comburant en amont est suffisamment élevée.

Cependant, l'échauffement de ladite étrave, engendré par la veine de comburant hypersonique, est sensiblement inversement proportionnel à la racine carrée du rayon du bord d'attaque de ladite étrave. Par suite, une étrave de faible rayon de bord d'attaque est soumise à des échauffements très importants. On remarquera de plus que, lesdits mâts d'injection étant disposés à l'intérieur du statoréacteur, il est impossible d'en assurer le refroidissement par rayonnement avec l'air dans lequel vole l'aéronef propropulsé par ledit statoréacteur. Par exemple, le dispositif d'injection du document US-A-3 727 409 comporte des moyens de refroidissement par injection de fluide et des moyens d'évacuation du fluide de refroidissement disposés à l'une au moins des extrémités longitudinales dudit mât. Une telle étrave est donc soumise à des températures très élevées, de l'ordre de 5000K par un aéronef volant à Mach 12 à une altitude de l'ordre de 30 km. Il est donc nécessaire de construire les mâts d'injection dans des matières, telles que les céramiques, le rayon dudit bord d'attaque étant de l'ordre de 3 à 5 mm. Cependant, compte-tenu des procédés actuels de réalisation de pièces de céramique, on conçoit aisément que la fabrication de mâts d'injection en matière céramique, devant satisfaire à une grande précision, est obligatoirement longue et coûteuse.

La présente invention a pour objet de remédier à ces inconvénients. Elle concerne un mât d'injection pour statoréacteur hypersonique, qui, à la fois, présente un bord d'attaque de faible rayon et peut être réalisé en des matières autres que des céramiques.

A cette fin, selon l'invention, le mât d'injection de combustible pour un statoréacteur destiné à fonctionner à un nombre de Mach élevé et comportant une chambre de combustion dans laquelle est introduite une veine de comburant, ledit mât comportant :
- une étrave recevant ladite veine de comburant et formant une rampe d'injecteurs élémentaires de combustible, disposée dans ladite veine de comburant transversalement à celle-ci et répartissant ledit combustible dans ladite veine de comburant,
- des moyens de refroidissement par injection de fluide ; et
- des moyens d'évacuation dudit fluide de refroidissement, disposés à au moins une extrémité longitudinale dudit mât,
est caractérisé
- en ce qu'il comporte :
   . un corps dans lequel sont agencés ladite rampe d'injecteurs élémentaires de combustible, lesdits moyens de refroidissement et lesdits moyens d'évacuation dudit fluide de refroidissement ; et
   . une pièce d'étrave en forme au moins approximative de dièdre à faces minces, réalisée en une matière thermiquement conductrice, l'angle dudit dièdre étant au plus égal à 15° et le rayon du bord d'attaque de ladite étrave étant au plus égal à 2 mm ;
- en que ladite pièce d'étrave est assemblée audit corps, de façon étanche, par lesdites faces minces ; et
- en ce que, en position assemblée de ladite pièce d'étrave sur ledit corps, il est formé une chambre étanche dans la concavité de ladite pièce d'étrave, entre celle-ci et ledit corps, lesdits moyens de refroidissement engendrant une pluralité de jets de fluide de refroidissement sous pression, répartis le long de ladite étrave et frappant la face concave de ladite pièce d'étrave mince, au moins dans la région dudit bord d'attaque.

Ainsi, puisque ladite étrave est une paroi mince dont la face concave interne est refroidie efficacement par l'impact des jets de fluide de refroidissement, la face convexe externe de ladite étrave, c'est-à-dire son bord d'attaque, est également refroidie efficacement par conduction thermique à travers l'épaisseur de ladite paroi mince, de sorte que la température à laquelle est soumise ladite étrave peut être seulement de l'ordre de 1000°C à 2000°C (à comparer aux 5000K mentionnés ci-dessus), bien que ladite étrave soit effilée (angle dièdre de 15°) et présente un faible rayon de bord d'attaque (au plus égal à 2 mm). Il en résulte que le mât d'injection conforme à la présente invention peut être réalisé en un acier (par exemple inoxydable), en un alliage métallique (par exemple à base de cuivre), ou en tout autre matière susceptible de résister à la température réellement atteinte par ledit mât refroidi, conformément à la présente invention.

Pour obtenir un tel refroidissement efficace de l'étrave, on a constaté qu'il était avantageux que :
- l'épaisseur de ladite paroi mince de l'étrave soit au plus égale à 2 mm ;
- la matière constituant ladite paroi mince ait une conductivité thermique de l'ordre de 70 W/m/K ; et
- le fluide de refroidissement soit un gaz à basse température, par exemple de l'hydrogène à une température de 100K à 300K.

Bien entendu, de ce qui a été mentionné ci-dessus, on comprendra que l'épaisseur, la conductivité thermique et la nature de ladite paroi mince, d'une part, et la température, la pression, le débit et la nature du fluide de refroidissement, d'autre part, constituent autant de paramètres permettant d'ajuster la température de ladite paroi mince.

Par exemple, une paroi d'étrave, dont l'épaisseur est de l'ordre de 1 mm, dont la matière constitutive a une conductivité de l'ordre de 70 W/m/K et ayant un angle dièdre de 12° et un rayon de bord d'attaque de 1,5 mm, est portée à une température voisine de 1500°C pour un nombre de Mach égal à 12, si on utilise, comme gaz de refroidissement, de l'hydrogène à une température de 100K à 300K sous une pression de l'ordre de 10 à 15 bars avec un débit de l'ordre de 2 à 5 g/s pour chaque cm de longueur de bord d'attaque.

A partir d'une telle configuration, il est bien évident, par exemple, que :
- si on utilise de l'hydrogène à une température différente, on pourra, toutes choses étant égales par ailleurs, maintenir la température de paroi en modifiant ledit débit ;
- si la matière constitutive de la paroi mince résiste à une température supérieure à 1500°C, par exemple 2000°C, cette matière constitutive peut présenter une conductivité thermique inférieure à 70 W/m/K, ou bien le refroidissement peut être moins performant ;
- etc ...

On remarquera par ailleurs que le mât d'injection conforme à la présente invention n'est pas limité aux nombres de Mach élevés, supérieurs à 10. En effet, si l'aéronef est dans une phase de vol dans laquelle le nombre de Mach est inférieur à 10, le fluide de refroidissement peut être un ergol, de pouvoir réfrigérant inférieur à celui de l'hydrogène, mais suffisant pour le refroidissement de l'étrave, au nombre de Mach considéré. Il suffit alors de concevoir l'alimentation du mât d'injection en fluide de refroidissement, pour que ledit mât reçoive, dans chaque phase de vol de l'aéronef, un fluide de refroidissement approprié.

Dans une forme de mise en oeuvre avantageuse, le fluide de refroidissement est constitué par du combustible pour ledit statoréacteur. Ainsi, il n'y a pas lieu de prévoir, à bord de l'aéronef, un réservoir particulier de fluide de refroidissement, ce fluide de refroidissement étant prélevé directement sur l'alimentation en combustible. De plus, après impact du fluide de refroidissement contre la face interne concave de l'étrave, lesdits moyens d'évacuation peuvent récupérer le fluide de refroidissement et le réinjecter dans la chambre de combustion du statoréacteur, augmentant ainsi les performances propulsives du statoréacteur.

La récupération du fluide de refroidissement peut se faire à l'intérieur ou à l'extérieur dudit mât d'injection et le fluide de refroidissement récupéré peut être injecté dans la chambre de combustion, soit directement, soit à travers les injecteurs élémentaires de combustible dudit mât. Eventuellement, entre sa récupération et sa réinjection dans la chambre de combustion, ledit fluide de refroidissement peut servir à refroidir un élément dudit statoréacteur, par exemple la carène d'une prise d'air.

Bien entendu, pour une bonne récupération du fluide de refroidissement, il est nécessaire de tenir compte des différences de pression entre le combustible injecté et le combustible récupéré, celui-ci étant détendu et à une pression inférieure. On doit faire en sorte que le combustible à haute pression se jette dans le combustible récupéré à basse pression. Eventuellement, un surpresseur peut être prévu sur le circuit de combustible récupéré pour en augmenter la pression.

De préférence, le débit de combustible utilisé comme fluide de refroidissement est inférieur à 20% du débit total de combustible injecté dans la chambre de combustion du statoréacteur.

Le mât d'injection conforme à la présente invention pourrait être réalisé en une seule pièce. Cependant, il est avantageux de le réaliser en au moins deux pièces assemblées, pour faciliter la réalisation de ladite chambre étanche, des canaux alimentant les injecteurs élémentaires de combustible, des canaux alimentant les moyens d'injection du fluide de refroidissement, des canaux d'évacuation du fluide de refroidissement après impact, ...

Par ailleurs, on remarquera que la partie aval (par rapport à l'écoulement de la veine de comburant) dudit mât est soumise à des contraintes thermiques qui, bien qu'élevées, sont inférieures à celles subies par ladite étrave.

L'assemblage dudit corps et de ladite pièce d'étrave peut être réalisé par tout moyen approprié à leurs matières constitutives, par exemple par soudure ou brasage, ou bien encore au moyen de vis, de colle, etc ...

De préférence, au moins du côté de ladite étrave, ledit corps présente une section en forme de coin dont l'angle est égal à celui de ladite pièce d'étrave, de sorte que lesdites faces minces de la pièce d'étrave s'appliquent contre les faces dudit coin et l'arête dudit coin est coupée sur au moins une partie de sa longueur pour former au moins une facette d'extrémité dans laquelle sont disposées des buses, faisant partie desdits moyens d'injection de fluide de refroidissement et engendrant lesdits jets dudit fluide de refroidissement frappant la face concave de ladite paroi mince.

Lesdits moyens d'évacuation du fluide de refroidissement peuvent comporter :
- au moins une rainure longitudinale pratiquée superficiellement dans ledit corps et obturée par une face de ladite pièce d'étrave ; et
- un réseau de rainures transversales superficielles faisant communiquer ladite chambre étanche avec ladite rainure longitudinale et également obturées par ladite pièce d'étrave.

De même, ladite rampe d'injection de combustible et lesdits moyens d'injection de fluide de refroidissement peuvent comporter des canaux longitudinaux d'alimentation et des canaux transversaux d'injection, tous pratiqués dans ledit corps du mât.

Afin d'injecter au mieux le combustible dans la veine de comburant, il est avantageux que ladite rampe d'injection de combustible soit disposée du côté du mât opposé à l'étrave. Par ailleurs, afin d'améliorer encore l'injection de combustible dans le comburant et le mélange combustible-comburant, la rampe d'injection de combustible peut comporter des séries d'injecteurs élémentaires distinctes, les unes injectant du combustible dans la direction de la veine de comburant et les autres injectant du combustible en oblique dans ladite veine.

Dans ce cas, le corps du mât d'injection peut comporter, du côté opposé à ladite étrave, une nervure de culot longitudinale médiane saillante, au moins une série d'injecteurs élémentaires étant agencée dans ladite nervure de culot et injectant du combustible dans la direction de la veine de comburant, alors que, de part et d'autre de ladite nervure de culot, sont agencées au moins deux séries d'injecteurs élémentaires injectant du combustible en oblique dans ladite veine.

Par ailleurs, de façon usuelle, le corps du mât d'injection comporte à ses extrémités des têtes destinées à l'ancrage du mât dans des parois opposées du statoréacteur et à l'alimentation dudit mât en combustible et en fluide de refroidissement.

Dans ce cas, il est avantageux que ladite pièce d'étrave recouvre au moins en partie lesdites têtes, de sorte que cette pièce soit maintenue par l'ancrage dans lesdites parois du statoréacteur. On accroît ainsi la solidarisation de la pièce d'étrave et dudit corps.

Les figures du dessin annexé feront bien comprendre comment l'invention peut être réalisée. Sur ces figures, des références identiques désignent des éléments semblables.

La figure 1 est une vue très schématique en perspective d'un exemple de réalisation de statoréacteur pourvu de mâts d'injection de combustible, l'enveloppe dudit statoréacteur étant supposée transparente.

La figure 2 est une vue en perspective éclatée d'un exemple de réalisation du mât d'injection de combustible conforme à la présente invention.

La figure 3 est une coupe longitudinale médiane du mât, assemblé, de la figure 2, selon la ligne III-III de cette dernière figure.

Les figures 4, 5, 6 et 7 sont des coupes transversales dudit mât d'injection de combustible, correspondant respectivement aux lignes de coupe IV-IV, V-V, VI-VI et VII-VII de la figure 3.

La figure 8 illustre schématiquement un exemple de récupération et de réinjection du fluide de refroidissement.

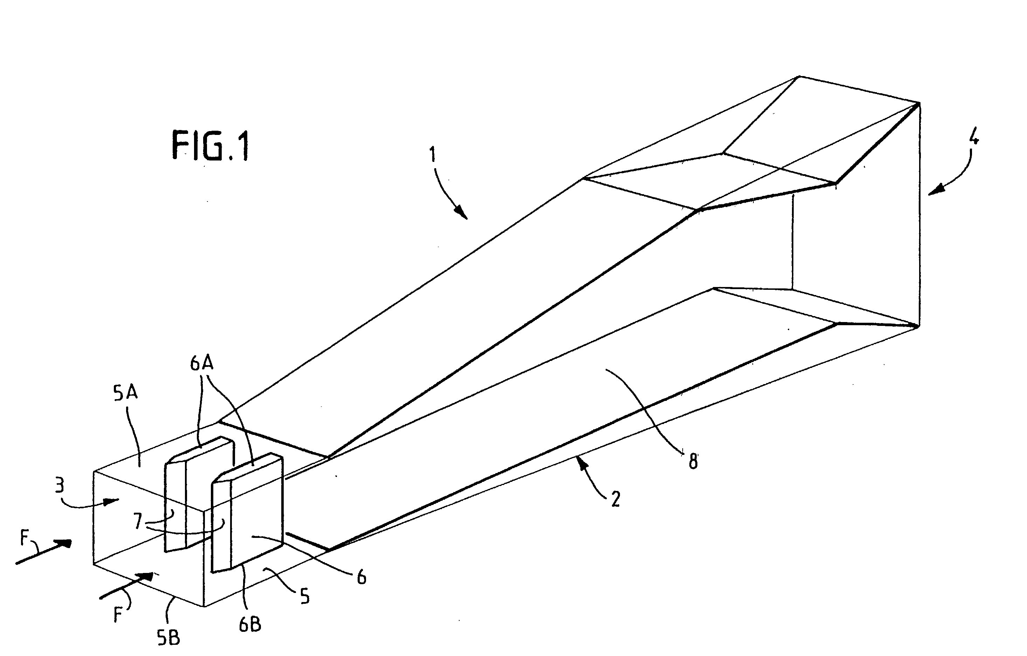

Le statoréacteur 1, montré par la figure 1, est destiné à la propulsion d'un aéronef hypersonique (non représenté) devant voler dans une large plage de nombre de Mach, par exemple d'environ Mach 6 à un nombre de Mach de l'ordre de 12 à 15.

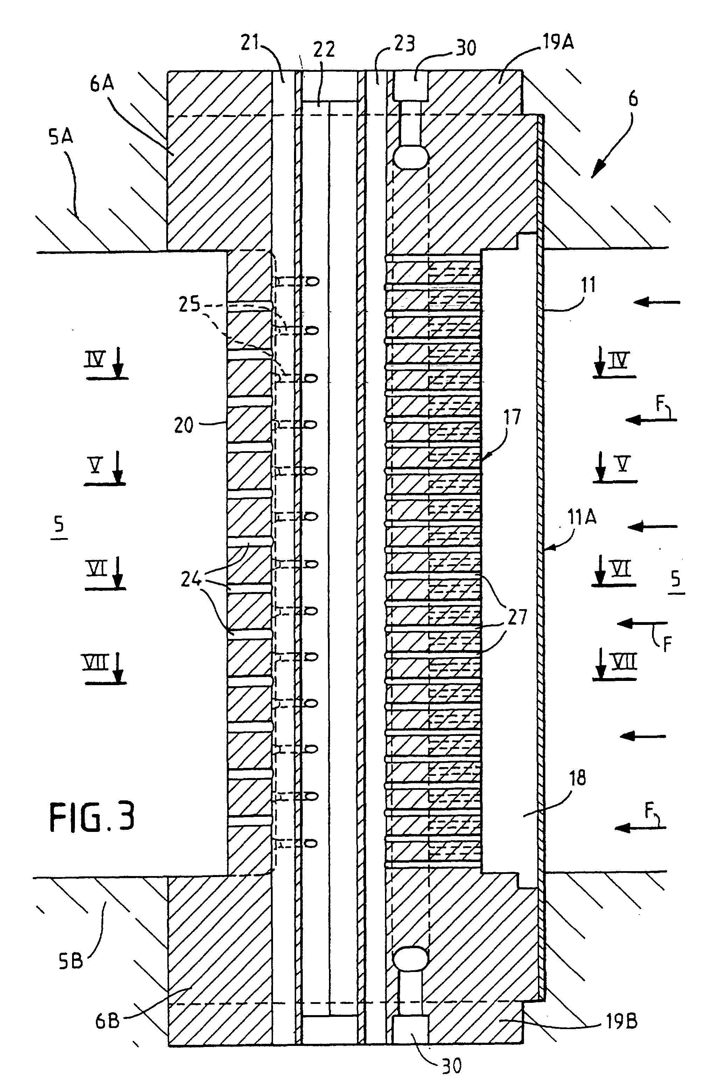

Le statoréacteur 1 comporte une enveloppe 2 pourvue, à l'une de ses extrémités, d'une prise d'air 3 pour une veine d'air devant servir de comburant (symbolisée par des flèches F) et, à son extrémité opposée, d'une tuyère 4. En aval de la prise d'air 3, l'enveloppe 2 forme une chambre d'injection 5, à l'intérieur de laquelle sont disposés deux mâts d'injection de combustible 6, transversalement à la veine de comburant F. Les mâts d'injection 6 comportent une étrave 7 recevant ladite veine de comburant et sont solidarisés de l'enveloppe 2, par leurs extrémités 6A et 6B fixées à la face interne de deux parois opposées 5A et 5B de la chambre d'injection 5. Entre la chambre d'injection 5 et la tuyère 4, l'enveloppe 2 délimite une chambre de combustion 8, à la partie amont de laquelle sont prévus des allumeurs (non représentés). A leur partie arrière (c'est-à-dire en regard de la chambre de combustion 8), lesdits mâts d'injection 6 comportent des rampes d'injection longitudinales (non visibles sur la figure 1, mais représentées sur les figures 3, 4 et 6).

Ainsi, le combustible est réparti dans toute la veine de comburant F, au niveau des mâts d'injection 6, et la combustion du flux du mélange comburant-combustible se produit dans la chambre de combustion 8, après quoi les gaz de combustion sont éjectés à travers la tuyère 4. On notera que, comme combustible, on peut utiliser du kérosène pour les nombres de Mach de vol les plus faibles (jusqu'à Mach 8) (éventuellement avec un barbotage d'hydrogène de façon à faciliter l'allumage du statoréacteur et l'éclatement du jet), puis de l'hydrogène pour les nombres de Mach plus élevés. D'autres combustibles, tels que du méthane, des hydrocarbures endothermiques, des combustibles de synthèse, peuvent également être employés pour un statoréacteur de ce type.

Dans l'exemple de réalisation particulier représenté sur la figure 1, l'enveloppe 2 du statoréacteur présente, dans son ensemble, une forme de conduite de section transversale rectangulaire ou carrée, constituée généralement de quatre parois deux à deux opposées (supposées transparentes sur cette figure 1). Il est bien entendu qu'une telle configuration n'est nullement limitative.

Comme cela a été mentionné ci-dessus, le bord d'attaque de l'étrave 7 des mâts d'injection 6 subit de très importants flux thermiques, lorsque la veine de comburant correspond à un vol hypersonique. A Mach 12, l'étrave 7 est portée à une température de l'ordre de 5000K.

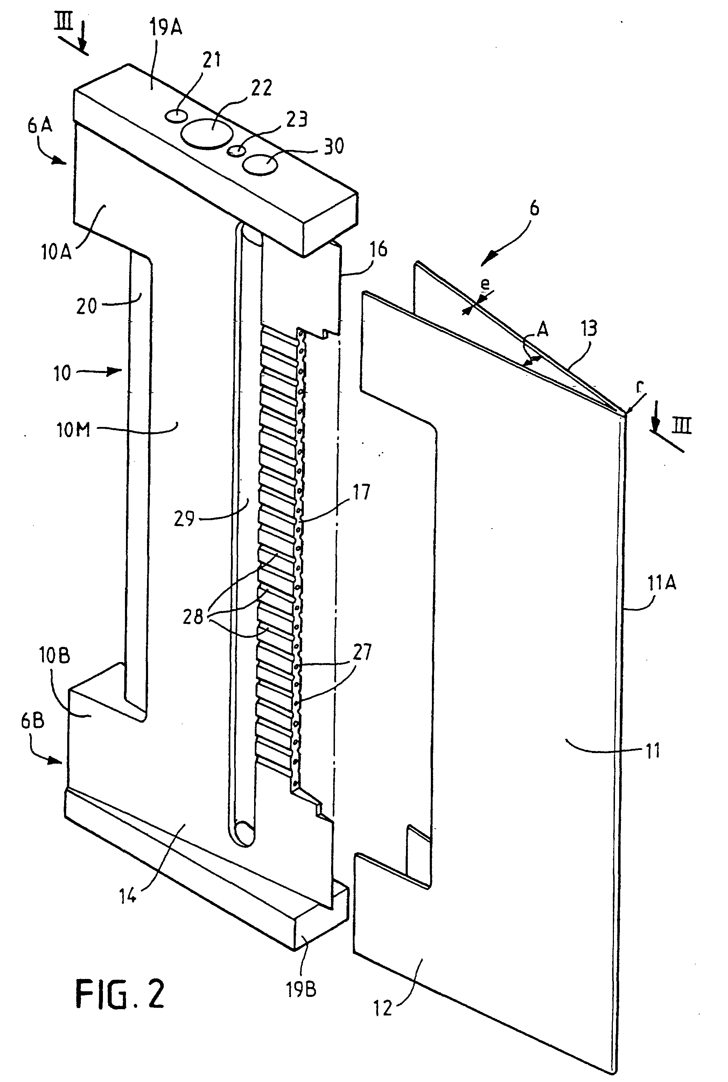

Les figures 2 à 7 illustrent un mode de réalisation pour un mât d'injection 6, conforme à l'invention et susceptible de résister à des contraintes thermiques aussi élevées.

Comme le montrent ces figures, dans ce mode de réalisation, le mât d'injection de combustible 6 comporte un corps 10, par exemple métallique et monobloc, dans lequel, comme on le verra par la suite, sont agencés des injecteurs de combustible, des moyens d'injection de fluide de refroidissement et des moyens d'évacuation de ce dernier fluide. Ce mât 6 comporte de plus une pièce d'étrave 11, par exemple métallique ou tout au moins en une matière dont la conductivité thermique est de l'ordre de 70 W/m/K, en forme de dièdre, dont l'angle A est au plus égal à 15°, par exemple égal à 12°. De plus, l'épaisseur e des faces de la pièce d'étrave 11 est au plus égale à 2 mm, par exemple égale à 1,5 mm et le rayon r de l'arête 11A de la pièce 11 est au plus égal à 2 mm. La pièce 11 est destinée à former l'étrave 7 du mât 6, son arête 11A étant alors le bord d'attaque de ladite étrave.

Sur sa plus grande longueur, le corps 10 présente une section en forme de coin dont l'angle est égal à l'angle A de la pièce d'étrave 11.

Ainsi, comme le montrent les figures 3 à 7, les faces 12 et 13 de la pièce d'étrave 11 s'appliquent contre les faces 14 et 15 du corps 10 quand les deux pièces 10 et 11 sont assemblées de manière étanche, par exemple au moyen de soudure ou de vis (de manière non représentée).

L'arête 16 du coin du corps 10 est échancrée et coupée dans la partie médiane 10M dudit corps pour former une facette d'extrémité 17. Ainsi, lorsque les pièces 10 et 11 sont assemblées, une chambre étanche 18 est délimitée, dans la concavité de la pièce d'étrave 11, entre la surface interne des faces 12 et 13 et la facette 17 du corps 10.

Les extrémités 6A et 6B du mât 6, destinées à être ancrées dans les deux parois opposées 5A et 5B de la chambre d'injection 5, correspondent à des parties élargies 10A et 10B, du côté opposé à l'arête 16, de la partie médiane triangulaire 10M du mât, recouvertes également par les faces 12 et 13 de la pièce d'étrave 11, ainsi qu'à des têtes d'extrémité parallélépipédiques 19A et 19B, respectivement portées par lesdites parties élargies 10A et 10B.

La partie médiane 10M du corps 10 comporte, du côté opposé à la facette 17, une nervure de culot longitudinale 20, en saillie et joignant les têtes 6A et 6B.

Longitudinalement, le corps 10 est percé de canaux 21, 22 et 23.

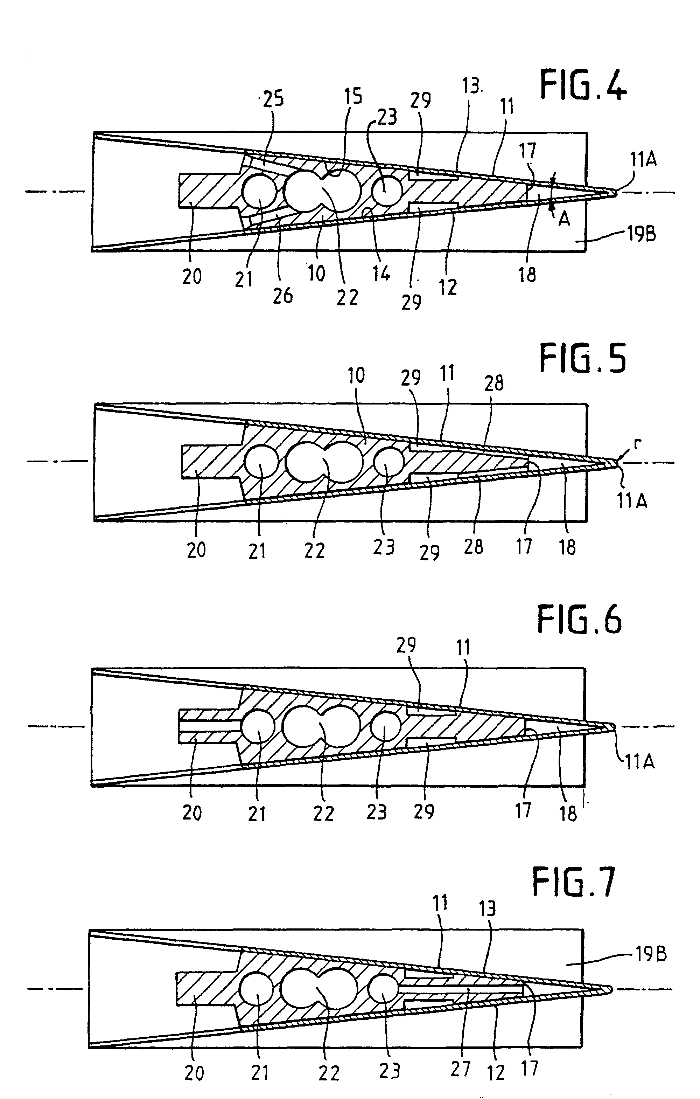

Le canal longitudinal 21 communique avec une pluralité de canaux transversaux 24, pratiqués dans la nervure 20 et répartis le long de la partie médiane 10M du corps 10 (voir les figures 3 et 6).

Le canal longitudinal 22 communique avec une pluralité de canaux transversaux 25 et 26 débouchant de part et d'autre de la nervure longitudinale 20 (voir les figures 3 et 4).

Le canal longitudinal 23 communique avec une pluralité de canaux transversaux 27 débouchant dans la facette 17 et donc dans la chambre étanche 18 (voir les figures 3 et 7).

Par ailleurs, les parois 14 et 15 de la partie médiane 10M du corps 10 comportent une pluralité de rainures superficielles transversales 28 reliant ladite facette 17 à des rainures longitudinales superficielles 29, elles-mêmes reliées à leurs extrémités à des canaux longitudinaux 30 débouchant à l'extrémité des têtes 6A et 6B. Les rainures superficielles 28 et 29 sont obturées par la pièce d'étrave 11 (voir les figures 3 et 5).

On comprendra aisément que, lorsque l'on injecte du combustible dans les canaux 21 et 22, celui-ci est injecté dans la chambre 5, en direction de la chambre de combustion 8, respectivement par les canaux transversaux 24 et 25 qui se comportent chacun comme un injecteur élémentaire. De même, lorsque l'on injecte un fluide de refroidissement dans le canal longitudinal 23, ce fluide de refroidissement est injecté dans la chambre étanche 18 par les canaux transversaux 27. Le fluide de refroidissement injecté dans la chambre 18 est récupéré par les rainures transversales 28 et conduit par celles-ci dans les rainures longitudinales 29. Il peut donc être évacué par les canaux 30.

Bien entendu, bien que sur la figure 3 on ait représenté les canaux 21, 22, 23 et 30 ouverts à leurs deux extrémités, il est possible d'obturer l'une ou l'autre desdites extrémités.

Conformément à une particularité importante de la présente invention, le fluide de refroidissement, par exemple de l'hydrogène à basse température, est à une pression telle (par exemple de l'ordre de 10 bars) que les jets de fluide de refroidissement sortant des canaux 27 traversent la chambre étanche 18 et frappent la surface interne des faces 12 et 13 de la pièce d'étrave 11, au moins au voisinage de l'arête 11A. Le débit du fluide de refroidissement doit bien entendu être suffisant, comme il a été dit ci-dessus, pour que la température de la pièce d'étrave 11, dans des conditions de vol à nombre de Mach élevé, reste comprise entre 1000°C et 2000°C. Dans le cas où le fluide de refroidissement est de l'hydrogène, un tel débit doit être de plusieurs grammes par seconde et par cm de longueur de bord d'attaque 11A.

Un tel fluide de refroidissement peut être du combustible utilisé pour alimenter la chambre de combustion 8. Dans ce cas, le fluide de refroidissement alimentant les moyens d'injection 23, 27 est dérivé du circuit alimentant la rampe d'injection 21, 22, 24, 25 et 26. De préférence, le débit de combustible utilisé comme fluide de refroidissement est inférieur à 20% du débit total de combustible injecté dans la chambre de combustion 8.

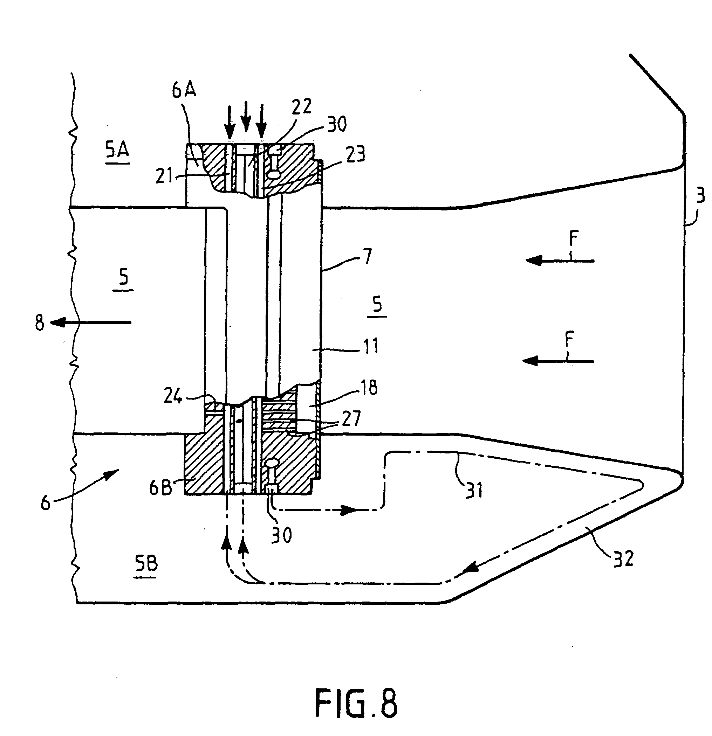

Il est bien entendu avantageux que les moyens 28, 29, 30 évacuant, après impact contre la pièce d'étrave 11, le combustible utilisé comme fluide de refroidissement, récupèrent ledit combustible et le réinjectent dans la chambre de combustion 8. La figure 8 illustre schématiquement un exemple d'une telle récupération. Dans cet exemple, le combustible, récupéré dans la chambre étanche 18 est réinjecté dans la chambre de combustion 8 par l'intermédiaire de la rampe 21, 22, 24, 25 et 26, après avoir suivi un trajet de refroidissement 31 permettant de refroidir une partie du statoréacteur 1, par exemple la carène 32 de la prise d'air 3.

## Revendications

1. Mât (6) d'injection de combustible pour un statoréacteur (1) destiné à fonctionner à un nombre de Mach élevé et comportant une chambre de combustion (8) dans laquelle est introduite une veine de comburant (F), ledit mât (6) comportant :
- une étrave (7) recevant ladite veine de comburant et formant une rampe d'injecteurs élémentaires de combustible (24, 25, 26), disposée dans ladite veine de comburant transversalement à celle-ci et répartissant ledit combustible dans ladite veine de comburant,
- des moyens de refroidissement (23,27) par injection de fluide ; et
- des moyens (28,29,30) d'évacuation dudit fluide de refroidissement, disposés à au moins une extrémité longitudinale (6A, 6B) dudit mât,
**caractérisé**
- **en ce qu'**il comporte :
. un corps (10) dans lequel sont agencés ladite rampe d'injecteurs élémentaires de combustible (24, 25, 26), lesdits moyens de refroidissement (23,27) et lesdits moyens d'évacuation dudit fluide de refroidissement (28, 29, 30) ; et
. une pièce d'étrave (11) en forme au moins approximative de dièdre à faces minces (12, 13), réalisée en une matière thermiquement conductrice, l'angle (A) dudit dièdre étant au plus égal à 15° et le rayon (r) du bord d'attaque (11A) de ladite étrave étant au plus égal à 2 mm ;
- en que ladite pièce d'étrave (11) est assemblée audit corps, de façon étanche, par lesdites faces minces ; et
- en ce que, en position assemblée de ladite pièce d'étrave (11) sur ledit corps (10), il est formé une chambre étanche (18) dans la concavité de ladite pièce d'étrave, entre celle-ci et ledit corps, lesdits moyens de refroidissement engendrant une pluralité de jets de fluide de refroidissement sous pression, répartis le long de ladite étrave et frappant la face concave de ladite pièce d'étrave mince, au moins dans la région dudit bord d'attaque (11A).

2. Mât d'injection selon la revendication 1,
**caractérisé en ce que** l'épaisseur (e) de ladite pièce d'étrave mince (11) est au plus égale à 2 mm.

3. Mât d'injection selon l'une des revendications 1 ou 2,
**caractérisé en ce que** la conductivité de la matière constitutive de ladite pièce d'étrave mince (11) est de l'ordre de 70 W/m/K.

4. Mât d'injection selon l'une des revendications 1 à 3,
**caractérisé en ce que** le fluide de refroidissement est un gaz à basse température.

5. Mât d'injection selon l'une des revendications 1 à 4, pour un aéronef devant voler à Mach 12, l'étrave dudit mât devant supporter une température voisine de 1500°C,
**caractérisé en ce que** :
- la pièce d'étrave mince (11) a un angle dièdre (A) de 12° et un rayon (r) de bord d'attaque égal à 1,5 mm ;
- la pièce d'étrave mince a une épaisseur (e) de l'ordre de 1 mm et sa matière constitutive présente une conductivité de l'ordre de 70 W/m/K ;
- le fluide de refroidissement est de l'hydrogène à une température de 100K à 300K sous une pression de l'ordre de 10 à 15 bars ; et
- le débit du fluide de refroidissement est de l'ordre de 2 à 5 g/s pour chaque cm de la longueur dudit bord d'attaque.

6. Mât d'injection selon l'une des revendications 1 à 5,
**caractérisé en ce que** le fluide de refroidissement est constitué par du combustible.

7. Mât d'injection selon la revendication 6,
**caractérisé en ce que** le débit de combustible utilisé comme fluide de refroidissement est inférieur à 20% du débit total de combustible injecté dans la chambre de combustion (8) du statoréacteur.

8. Mât d'injection selon l'une des revendications 6 ou 7,
**caractérisé en ce que** lesdits moyens d'évacuation (28, 29, 30) récupèrent le fluide de refroidissement après impact contre la face concave de la paroi mince d'étrave (11) et le réinjectent dans la chambre de combustion (8) du statoréacteur.

9. Mât d'injection selon l'une des revendications 1 à 8,
**caractérisé en ce que**, au moins du côté de ladite étrave, ledit corps (10) présente une section en forme de coin dont l'angle est égal à celui de ladite pièce d'étrave (11), de sorte que lesdites faces minces (12, 13) de la pièce d'étrave s'appliquent contre les faces (14, 15) dudit coin et **en ce que** l'arête (16) dudit coin est coupée sur au moins une partie de sa longueur pour former au moins une facette d'extrémité (17) dans laquelle sont disposées des buses (27), faisant partie desdits moyens d'injection de fluide de refroidissement et engendrant lesdits jets dudit fluide de refroidissement frappant la face concave de ladite paroi mince (11).

10. Mât d'injection selon l'une des revendications 1 à 9,
**caractérisé en ce que** lesdits moyens d'évacuation du fluide de refroidissement comportent :
- au moins une rainure longitudinale (29) pratiquée superficiellement dans ledit corps (10) et obturée par une face de ladite pièce d'étrave (11) ; et
- un réseau de rainures transversales superficielles (28) faisant communiquer ladite chambre étanche (18) avec ladite rainure longitudinale (29) et également obturées par ladite pièce d'étrave.

11. Mât d'injection selon l'une des revendications 1 à 10,
**caractérisé en ce que** ladite rampe d'injecteurs élémentaires de combustible et lesdits moyens de refroidissement comportent des canaux longitudinaux d'alimentation (21, 22, 23) et des canaux transversaux d'injection (24 à 27), tous pratiqués dans ledit corps du mât.

12. Mât d'injection selon l'une des revendications 1 à 11,
**caractérisé en ce que** ladite rampe d'injecteurs élémentaires de combustible est disposée du côté dudit mât opposé à ladite étrave.

13. Mât d'injection selon la revendication 12,
**caractérisé en ce que** ladite rampe d'injecteurs élémentaires de combustible comporte des séries d'injecteurs élémentaires distinctes, les unes injectant du combustible dans la direction de la veine de comburant et les autres injectant du combustible en oblique dans ladite veine.

14. Mât d'injection selon les revendications 1 et 13,
**caractérisé en ce que** le corps (10) dudit mât comporte, du côté opposé à ladite étrave, une nervure de culot (20) longitudinale médiane saillante, **en ce que** dans ladite nervure de culot est agencée au moins une série d'injecteurs élémentaires (24) injectant du combustible dans la direction de la veine de comburant et **en ce que**, de part et d'autre de ladite nervure de culot, sont agencées au moins deux séries d'injecteurs élémentaires (25, 26) injectant du combustible en oblique dans ladite veine.

15. Mât d'injection selon l'une des revendications 1 à 14,
**caractérisé en ce que** ledit corps (10) du mât d'injection comporte à ses extrémités des têtes (6A, 6B) destinées à l'ancrage du mât dans des parois opposées (5A, 5B) dudit statoréacteur et à l'alimentation dudit mât en combustible et en fluide de refroidissement, ainsi qu'à l'évacuation de ce dernier, et **en ce que** ladite pièce d'étrave (11) recouvre au moins en partie lesdites têtes.

## Claims

1. Fuel injection stub (6) for a ramjet (1) which is designed to operate at a high Mach number and which includes a combustion chamber (8) into which an oxidizer flow (F) is introduced, the said stub (6) including:
- a nose (7) receiving the said oxidizer flow and forming a rail of elementary fuel injectors (24, 25, 26), the said rail being arranged in the said oxidizer flow transversely to the latter and distributing the said fuel in the said oxidizer flow,
- means (23, 27) for cooling by fluid injection; and
- means (28, 29, 30) for removing the said coolant, these means being placed at at least one longitudinal end (6A, 6B) of the said stub,
**characterized**
- **in that** it includes:
• a body (10) in which the said rail of elementary fuel injectors (24, 25, 26), the said cooling means (23, 27) and the said means for removing the said coolant (28, 29, 30) are arranged; and
• a nose piece (11) having at least approximately the shape of a dihedron with thin faces (12, 13), made from a thermally conductive material, the angle (A) of the said dihedron being at most equal to 15° and the radius (r) of the leading edge (11A) of the said nose being at most equal to 2 mm;
- in that the said nose piece (11) is joined to the said body, in a sealed manner, by the said thin faces; and
- in that, in the position in which the said nose piece (11) is joined to the said body (10), a sealed chamber (18) is formed in the concavity of the said nose piece, between the latter and the said body, the said cooling means producing a number of jets of pressurized coolant which are distributed along the said nose and strike the concave face of the said thin nose piece, at least in the region of the said leading edge (11A)

2. Injection stub according to Claim 1, **characterized in that** the thickness (e) of the said thin nose piece (11) is at most equal to 2 mm.

3. Injection stub according to either of Claims 1 and 2, **characterized in that** the conductivity of the constituent material of the said thin nose piece (11) is about 70 W/(m.K).

4. Injection stub according to one of Claims 1 to 3, **characterized in that** the coolant is a low-temperature gas.

5. Injection stub according to one of Claims 1 to 4, for an aircraft having to fly at Mach 12, the nose of the said stub having to withstand a temperature close to 1500°C,
**characterized in that**:
- the thin nose piece (11) has a dihedral angle (A) of 12° and a leading-edge radius (r) equal to 1.5 mm;
- the thin nose piece has a thickness (e) of about 1 mm and its constituent material has a conductivity of about 70 W/(m.K);
- the coolant is hydrogen at a temperature of 100 K to 300 K and at a pressure of about 10 to 15 bar; and
- the flow rate of the coolant is about 2 to 5 g/s for each cm of length of the said leading edge.

6. Injection stub according to one of Claims 1 to 5,
**characterized in that** the coolant consists of fuel.

7. Injection stub according to Claim 6,
**characterized in that** the flow rate of fuel used as coolant is less than 20% of the total flow rate of fuel injected into the combustion chamber (8) of the ramjet.

8. Injection stub according to either of Claims 6 and 7,
**characterized in that** the said evacuation means (28, 29, 30) recover the coolant after impact against the concave face of the thin wall (11) of the nose and reinject it into the combustion chamber (8) of the ramjet.

9. Injection stub according to one of Claims 1 to 8,
**characterized in that**, at least on the side where the said nose is located, the said body (10) has a cross section with the shape of a wedge, the angle of which is equal to that of the said nose piece (11), so that the said thin faces (12, 13) of the nose piece are pressed against the faces (14, 15) of the said wedge and **in that** the edge (16) of the said wedge is cut over at least part of its length in order to form at least one end facet (17) in which injection nozzles (27) are arranged, the said injection nozzles forming part of the said coolant injection means and producing the said jets of the said coolant striking the concave face of the said thin wall (11).

10. Injection stub according to one of Claims 1 to 9,
**characterized in that** the said means for removing the coolant include:
- at least one longitudinal groove (29) made on the surface of the said body (10) and closed off by one face of the said nose piece (11); and
- an array of transverse surface grooves (28) bringing the said sealed chamber (18) into communication with the said longitudinal groove (29) and also closed off by the said nose piece.

11. Injection stub according to one of Claims 1 to 10,
**characterized in that** the said rail of elementary fuel injectors and the said cooling means include longitudinal feed channels (21, 22, 23) and transverse injection channels (24 to 27), all these being made in the said body of the stub.

12. Injection stub according to one of Claims 1 to 11,
**characterized in that** the said rail of elementary fuel injectors is arranged on that side of the said stub which is opposite the said nose.

13. Injection stub according to Claim 12,
**characterized in that** the said rail of elementary fuel injectors includes series of separate elementary injectors, some of them injecting fuel in the direction of the oxidizer flow and the others injecting fuel obliquely into the said flow.

14. Injection stub according to Claims 1 and 13,
**characterized in that** the body (10) of the said stub includes, on the side opposite the said nose, a projecting central longitudinal base rib (20), **in that** at least one series of elementary injectors (24) injecting fuel in the direction of the oxidizer flow is arranged in the said base rib and **in that** at least two series of elementary injectors (25, 26) injecting fuel obliquely into the said flow are arranged on each side of the said base rib.

15. Injection stub according to one of Claims 1 to 14,
**characterized in that** the said body (10) of the injection stub includes, at its ends, heads (6A, 6B) which are designed to anchor the stub in opposite walls (5A, 5B) of the said ramjet and to feed the said stub with fuel and coolant, as well as to remove the latter and **in that** the said nose piece (11) covers at least part of the said heads.

## Patentansprüche

1. Brennstoffeinspritzstrebe (6) für ein Staustrahltriebwerk (1), das mit hoher Machzahl funktionieren soll und eine Brennkammer (8) umfasst, in die ein Sauerstoffträgerstrahl (F) eingeleitet werden soll, wobei die genannte Strebe (6) folgendes umfasst:
- ein Bug (7), auf den der genannte Sauerstoffträgerstrahl auftrifft und der eine Rampe elementarer Brennstoffeinspritzdüsen (24, 25, 26) bildet, die quer im genannten Sauerstoffträgerstrahl angeordnet ist und den genannten Brennstoff im genannten Sauerstoffträgerstrahl verteilt,
- Mittel zur Kühlung (23, 27) durch Kühlmitteleinspritzung, und
- Mittel (28, 29, 30) zur Abführung des genannten Kühlmittels, die mindestens an einem Längsende (6A, 6B) der genannten Strebe angeordnet sind, **dadurch gekennzeichnet**,
- dass sie folgendes umfasst:
• einen Körper (10), in dem die genannte Rampe mit elementaren Brennstoffeinspritzdüsen (24, 25, 26), die genannten Kühlmittel (23, 27) und die genannten Mittel zur Abführung des genannten Kühlmittels (28, 29, 30) angeordnet sind, und
• ein Bugteil (11) in mindestens annähernder Form eines Dieders mit dünnen Seiten (12, 13), das aus einem wärmeleitenden Material hergestellt ist, wobei der Winkel (A) des genannten Dieders höchstens 15° beträgt und der Radius (r ) der Vorderkante (11A) des genannten Bugs höchstens gleich 2 mm ist;
- dass das genannte Bugteil (11) mit den genannten dünnen Seiten dicht am genannten Körper befestigt ist, und
- dass in am genannten Körper (10) montierter Stellung des genannten Bugteils (11) in der Hohlfläche des genannten Bugteils zwischen diesem und dem genannten Körper eine dichte Kammer (18) gebildet wird, wobei die genannten Kühlmittel mehrere Kühlmitteldruckstrahlen erzeugen, die entlang des genannten Bugs verteilt sind und im Bereich der genannten Vorderkante (11A) auf die konkave Seite des dünnen Bugteils treffen.

2. Einspritzstrebe gemäß Anspruch 1,
**dadurch gekennzeichnet, dass** die Dicke (e) des genannten dünnen Bugteils (11) höchstens gleich 2 mm ist.

3. Einspritzstrebe gemäß Anspruch 1 oder 2,
**dadurch gekennzeichnet, dass** die Leitfähigkeit des Materials, aus dem das genannte dünne Bugteil (11) besteht, 70 W/m/K beträgt.

4. Einspritzstrebe gemäß einem der Ansprüche 1 bis 3,
**dadurch gekennzeichnet, dass** es sich bei dem Kühlmittel um ein Niedertemperaturgas handelt.

5. Einspritzstrebe gemäß einem der Ansprüche 1 bis 4 für ein Flugzeug, das mit Mach 12 fliegen soll und bei dem der Bug der genannten Strebe eine Temperatur von etwa 1500 °C aushalten muss,
**dadurch gekennzeichnet, dass**:
- das dünne Bugteil (11) einen Diederwinkel (A) von 12° und einen Vorderkantenradius (r ) von 1,5 mm besitzt,
- das dünne Bugteil eine Dicke (e) von 1 mm besitzt und das Material, aus dem es besteht, eine Leitfähigkeit von 70 W/m/K hat;
- das Kühlmittel Wasserstoff mit einer Temperatur von 100 K bis 300 K und einem Druck von 10 bis 15 bar ist, und
- die Kühlmitteldurchflussmenge 2 bis 5 g/s für jeden Zentimeter der Länge der genannten Vorderkante beträgt.

6. Einspritzstrebe gemäß einem der Ansprüche 1 bis 5,
**dadurch gekennzeichnet, dass** das Kühlmittel durch Brennstoff gebildet wird.

7. Einspritzstrebe gemäß Anspruch 6,
**dadurch gekennzeichnet, dass** die Menge an als Kühlmittel verwendetem Brennstoff weniger als 20 % der gesamten in die Brennkammer (8) des Staustrahltriebwerks eingespritzten Brennstoffmenge ausmacht.

8. Einspritzstrebe gemäß Anspruch 6 oder 7,
**dadurch gekennzeichnet, dass** die genannten Abführungsmittel (28, 29, 30) nach dem Auftreffen auf die konkave Seite der dünnen Bugwand (11) das Kühlmittel wieder auffangen und es erneut in die Brennkammer (8) der Staustrahltriebwerks einspritzen.

9. Einspritzstrebe gemäß einem der Ansprüche 1 bis 8,
**dadurch gekennzeichnet, dass** der genannte Körper (10) zumindest auf der Seite des genannten Bugs einen keilförmigen Querschnitt aufweist, dessen Winkel gleich dem des genannten Bugteils (11) ist, so dass die genannten dünnen Seiten (12, 13) des Bugteils an den Seiten (14, 15) des genannten Keils anliegen, und dadurch, dass die Kante (16) des genannten Keils an mindestens einem Teil seiner Länge gebrochen ist, um mindestens eine Endfacette (17) zu bilden, in der Düsen (27) angeordnet sind, die Bestandteil der genannten Kühlmitteleinspritzmittel sind und die genannten Strahlen des genannten Kühlmittels bilden, die auf die konkave Seite der genannten dünnen Wand (11) auftreffen.

10. Einspritzstrebe gemäß einem der Ansprüche 1 bis 9,
**dadurch gekennzeichnet, dass** die genannten Mittel zur Abführung des Kühlmittels folgendes umfassen:
- mindestens eine Längsnut (29), die oberflächlich in den genannten Körper (10) eingeschnitten ist und von einer Seite des genannten Bugteils (11) verschlossen wird, und
- ein Netz oberflächlicher Quernuten (28), die die Verbindung zwischen der genannten dichten Kammer (18) und der genannten Längsnut (29) herstellen und ebenfalls durch das genannte Bugteil verschlossen werden.

11. Einspritzstrebe gemäß einem der Ansprüche 1 bis 10,
**dadurch gekennzeichnet, dass** die genannte Rampe elementarer Brennstoffeinspritzdüsen und die genannten Kühlmittel längs verlaufende Zuführkanäle (21, 22, 23) und quer verlaufende Einspritzkanäle (24 bis 27) umfassen, die alle in dem genannten Körper der Strebe vorgesehen sind.

12. Einspritzstrebe gemäß einem der Ansprüche 1 bis 11,
**dadurch gekennzeichnet, dass** die genannte Rampe elementarer Brennstoffeinspritzdüsen auf der Seite der genannten Strebe gegenüber dem genannten Bug angeordnet ist.

13. Einspritzstrebe gemäß Anspruch 12,
**dadurch gekennzeichnet, dass** die genannte Rampe elementarer Brennstoffeinspritzdüsen Reihen von getrennten elementaren Einspritzdüsen umfasst, von denen die einen Brennstoff in Richtung des Sauerstoffträgerstrahls einspritzen und die anderen Brennstoff schräg in den genannten Strahl einspritzen.

14. Einspritzstrebe gemäß den Ansprüchen 1 und 13,
**dadurch gekennzeichnet, dass** der Körper (10) der genannten Strebe gegenüber dem genannten Bug eine vorstehende mittlere Sockellängsrippe (20) umfasst, dadurch, dass in der genannten Sockelrippe mindestens eine Reihe elementarer Einspritzdüsen (24) angeordnet ist, die Brennstoff in Richtung des Sauerstöffträgerstrahls einspritzen, und dadurch, dass auf beiden Seiten der genannten Sockelrippe mindestens zwei Reihen elementarer Einspritzdüsen (25, 26) angeordnet sind, die Brennstoff schräg in den genannten Strahl einspritzen.

15. Einspritzstrebe gemäß einem der Ansprüche 1 bis 14,
**dadurch gekennzeichnet, dass** der genannte Körper (10) der Einspritzstrebe an seinen Enden Köpfe (6A, 6B) zur Verankerung der Strebe in gegenüberliegenden Wänden (5A, 5B) des genannten Staustrahltriebwerks und zur Speisung der genannten Strebe mit Brennstoff und Kühlmittel sowie zur Abführung des letzteren umfasst, und dadurch, dass das genannte Bugteil (11) die genannten Köpfe mindestens teilweise bedeckt.
